(19) Europäisches Patentamt
European Patent Office
Office européen des brevets

(11) **EP 2 937 241 B1**

(12) **EUROPEAN PATENT SPECIFICATION**

(45) Date of publication and mention
of the grant of the patent:
**08.03.2017 Bulletin 2017/10**

(51) Int Cl.:
**B61L 23/04** *(2006.01)*          **B61L 27/00** *(2006.01)*
**G01M 17/08** *(2006.01)*

(21) Application number: **14165743.7**

(22) Date of filing: **24.04.2014**

(54) **Railway vehicle damage estimation**

Schienenfahrzeugschadensschätzung

Estimation des dommages de véhicule ferroviaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2015 Bulletin 2015/44**

(73) Proprietor: **Hitachi, Ltd.**
**Tokyo 100-8280 (JP)**

(72) Inventor: **Kono, Toshiaki**
**London, Greater London W8 4AN (GB)**

(74) Representative: **Gill, Stephen Charles**
**Mewburn Ellis LLP**
**City Tower**
**40 Basinghall Street**
**London EC2V 5DE (GB)**

(56) References cited:
**WO-A1-2013/162398     WO-A2-01/15001**

- **SARAH S. SOH, NOR. H. M. RADZI, HABIBOLLAH HARON: "Review on Scheduling Techniques of Preventive Maintenance Activities of Railway", 2012 FOURTH INTERNATIONAL CONFERENCE ON COMPUTATIONAL INTELLIGENCE, MODELLING AND SIMULATION, 31 December 2012 (2012-12-31), pages 310-315, XP002731006,**
- **Hongfei Li: "Predictive Maintenance Sensor Rich but Uncertain Information Quality Environment Case Study in Railroad", , 31 December 2013 (2013-12-31), XP002731007, Retrieved from the Internet: URL:http://www.qprc2013.com/uploads/Smart_City_Infrastructure-Li-Predictive_Maintena nce-QPRC2013.pdf [retrieved on 2014-10-09]**

**Description**

Field of the Invention

The present invention relates to a method and a system for estimating damage to a railway vehicle.

Background of the Invention

Conventionally, railway vehicle maintenance is performed according to a routine schedule. Accordingly, it can be difficult to perform timely maintenance in respect of vehicle damage or failures are caused by accidents, random events or other unforeseen conditions. Thus, to improve vehicle reliability, it would be desirable if maintenance was planned according to the actual condition of the rolling-stock. WO01/015001A2, for example, proposes detecting the condition of rolling-stock based on information from on-board sensors.

However, it can be difficult to detect the condition of some components using on-board sensors. Some examples are pantograph shoe wear, wheel surface damage and wheel shape distortion.

US5956664 proposes a method and apparatus for monitoring track infrastructure and planning maintenance. For example, rail abnormalities can be detected through monitoring data obtained from sensors mounted on rolling-stock, and diagnosing abnormalities from the data to plan infrastructure maintenance.

Summary of the Invention

An aim of the present invention is to improve the maintenance, reliability and operational availability of railway vehicles. The present invention is at least partly based on the recognition that some damage and failure modes are heavily influenced by operational conditions external to the vehicle, e.g. conditions of static (non-rolling stock) infrastructure such as track and overhead wires, and environmental conditions such as weather.

Accordingly, in a first aspect, the present invention provides a method for estimating damage to a railway vehicle according to claim 1.

Thus, rather than measuring the condition of the moving vehicle (whether via on-board or way-side detectors), the measured condition external to the vehicle, such as the condition of rails or overhead wires, or condition of snow build up on the track, can be used to infer damage to the railway vehicle, allowing preventative maintenance to be scheduled even for components that are not amenable to monitoring by on-board sensors. Indeed, even if a component can be monitored by an on-board sensor, it may be more cost-effective to infer its state from the measured external condition than to install and operate on-board sensors. In particular, installing and maintaining on-board sensors in every vehicle of a fleet of vehicles tends to be more costly than a measurement of external condition which applies to all the vehicles.

In a second aspect, the present invention provides a method for planning maintenance of a railway vehicle including:

performing the method for estimating damage of the first aspect; and
generating a vehicle maintenance schedule based on the estimated possible damage.

For example, the maintenance schedule can include, e.g. for a given type of estimated possible damage, a respective entry specifying any one or more of: a specified maintenance task, a task start time, a task duration, and a maintenance facility for performing the task. The schedule may include a plurality of such entries. Optionally, the maintenance schedule can include, for the or each entry, the estimated possible damage, e.g. in the form of a possible damage value. In the generating step, maintenance can be scheduled when a possible damage value exceeds a corresponding trigger damage value.

The method of the second aspect may further include: displaying the generated maintenance schedule, and/or displaying the recorded route data and the measured external condition.

In a third aspect, the present invention provides a procedure for operating a fleet of railway vehicles including:

performing the method of the first aspect for each vehicle of the fleet; and
scheduling operation of the vehicles so that, for each vehicle, the or each possible damage value stays below a corresponding trigger damage value.

In particular, vehicles which have damage values approaching their corresponding trigger damage values can be operated according to the schedule less frequently than vehicles with relatively low damage values. In this way, vehicle failures can be reduced, while allowing vehicles to be subjected to regular rather than contingent maintenance. The method of the third aspect can be combined with the method of the second aspect, e.g. so that they share the same trigger value(s), the method of third aspect ending when it is no longer possible to avoid a possible damage value exceeds a corresponding trigger damage value.

In a fourth aspect, the present invention provides a procedure for repairing a railway vehicle including:

performing the method of the second aspect; and
performing maintenance on the railway vehicle according to the generated maintenance schedule.

Further aspects of the present invention provide: a computer program comprising code which, when run on a computer, causes the computer to perform the method of the first, second or third aspect; a computer readable medium storing a computer program comprising code which, when run on a computer, causes the computer to perform the method of the first, second or third aspect; and a system configured to perform the method of the first, second or third aspect.

For example, a system (corresponding to the method of the first aspect) can be provided for estimating damage to a railway vehicle, the system including:

one or more databases for recording route data on the routes over which the railway vehicle travels
one or more sensors for measuring the condition external to the vehicle along the routes at the time of travel by the railway vehicle; and
one or more processors for estimating possible damage to the railway vehicle by correlating the recorded route data with occurrence of the measured external condition.

The databases may further record: cumulative exposure values, correlation coefficients and/or trigger damage values, as discussed in more detail below. Likewise, the one or more processors may further: calculate a possible damage value using a cumulative exposure value (and optionally using a correlation coefficient), update such a correlation coefficient and/or trigger damage value, generate a vehicle maintenance schedule (e.g. when a possible damage value exceeds a corresponding trigger damage value), and/or schedule the operation of a fleet of vehicles (e.g. so that for each vehicle possible damage values stay below corresponding trigger damage values) as discussed in more detail below,

The databases may be stored on computer-readable medium or media. The example system may further include a display device e.g. for displaying a generated maintenance schedule and/or displaying the recorded route data and the measured external condition.

Optional features of the invention will now be set out. These are applicable singly or in any combination with any aspect of the invention.

The external condition can include the condition of static (i.e. non-rolling stock) infrastructure, such as the amount of ice on overhead wires, the degree of rail roughness and/or the degree of rail distortion. However, alternatively or additionally, the external condition can include the environmental condition, such as the amount of snow and/or the amount of air-born dust. By external condition, we therefore preferably mean conditions which are not of the vehicle itself, but rather which pertain to the infrastructure and/or environment along and through which the vehicle travels.

The external condition can be measured directly or indirectly. For example, the amount of ice on overhead wires can be measured indirectly e.g. by sensors which measure the local weather conditions, such as temperature, humidity and/or amount of precipitation, and determining a likely ice amount therefrom. As another example, the degree of rail roughness can be measured indirectly e.g. by vibration sensors measuring vibration of the rails. On the other hand, cameras can be used to visualise and hence measure the external condition more directly.

Conveniently, in the recording step, the route data may identify the lines over which the vehicle travels and the times at which the lines are travelled. In the measuring step, the time and the location of the external condition may be measured.

In the measuring step, the external condition is measured as one or more quantitative values. These values can be normalised to a standard unit distance of vehicle travel. In the estimating step, for the or each quantitative value, a respective possible damage value is then estimated using a cumulative exposure value which quantifies the cumulative exposure of the vehicle to the quantitative value over the recorded routes. For example, in the measuring step, the amount of ice on overhead wires can be measured as a quantitative value, and in the estimating step a respective possible damage value can quantify possible pantograph shoe wear. As another example, in the measuring step, the degree of rail roughness can be measured as a quantitative value, and in the estimating step respective possible damage values can quantify possible wheel surface wear and/or possible distortion of wheel shape. In a further example, the degree of rail distortion can be measured as a quantitative value, and a respective possible damage value can quantify possible distortion of wheel shape. These last two examples show that it is possible for a given damage value (e.g. a value corresponding to distortion of wheel shape) to be produced by more than one external condition (e.g. rail roughness and rail distortion). Two more examples are: (1) amount of snow on track measured as a quantitative value and a respective possible damage value quantifying possible under-frame damage caused by ballast hit, and (2) amount of air-born dust and sand measured as a quantitative value and a respective possible damage value quantifying possible air conditioner damage.

In the estimating step, the respective possible damage value may be estimated by multiplying the cumulative exposure value with a corresponding correlation coefficient for the respective possible damage value. The method can then further include updating the correlation coefficient and/or a corresponding trigger damage value based on an assessment of actual damage to the vehicle. In this way, the accuracy of subsequent damage estimates can be improved. If more than one external condition contributes to a given damage value (e.g. rail roughness and rail distortion in the case of distortion of wheel shape), then the cumulative exposure value can combine the exposures of the vehicle to the respective quantitative values over the recorded routes.

Brief Description of the Drawings

Embodiments of the invention will now be described by way of example with reference to the accompanying drawings in which:

Figure 1 shows a diagrammatic view of an example railway vehicle damage estimation and maintenance system;

Figure 2 shows a functions flowchart for the system of Figure 1;

Figure 3 shows an alternative diagrammatic view of the system of Figure 1, including elements of a wider system architecture;

Figure 4 shows examples of external condition data;

Figure 5 shows examples of operation data;

Figure 6 shows examples of failure knowledge data;

Figure 7 shows a flowchart of vehicle damage estimation;

Figure 8 shows a flowchart of maintenance schedule generation procedure;

Figure 9 shows examples of data in a generated maintenance schedule;

Figure 10 shows an example graphical user interface display; and

Figure 11 shows examples of vehicle inspection data.

Detailed Description and Further Optional Features of the Invention

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention, it being understood that various changes may be made in the function and arrangement of elements without departing from the scope of the invention.

Specific details are given in the following description to provide a thorough understanding of the embodiments. However, it will be understood by one of ordinary skill in the art that embodiments maybe practiced without these specific details. For example, well-known circuits, processes, algorithms, structures, and techniques may be shown without unnecessary detail in order to avoid obscuring the embodiments.

Also, it is noted that embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

As disclosed herein, the term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

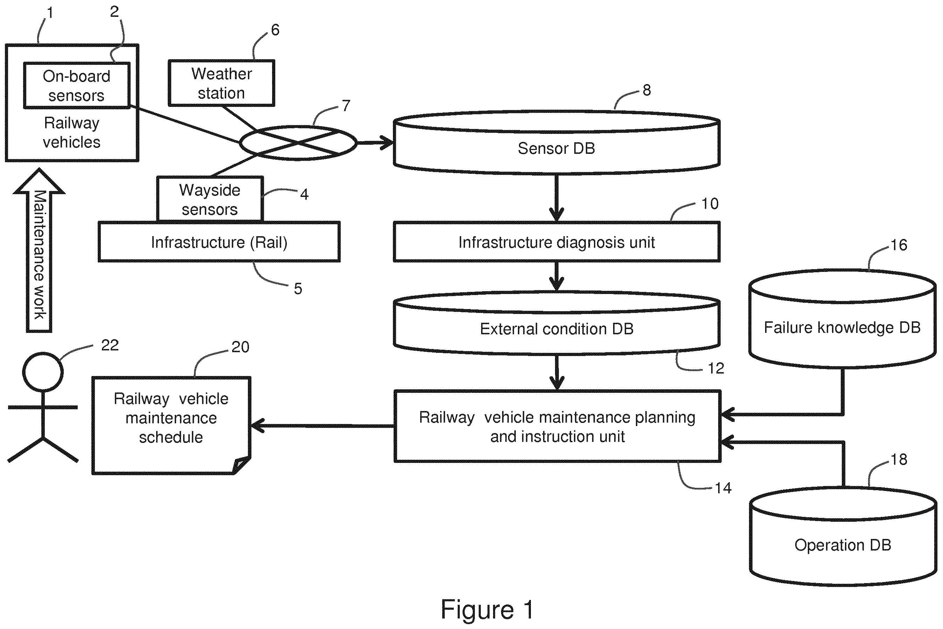

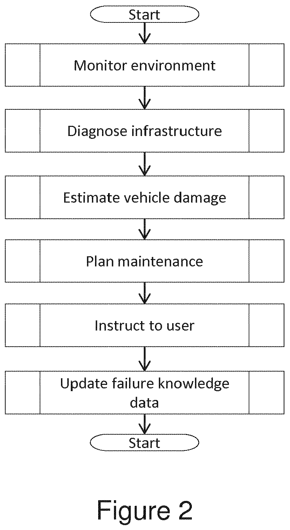

Figure 1 shows a diagrammatic view of an example railway vehicle damage estimation and maintenance system, and Figure 2 shows a corresponding functions flowchart. The system includes on-board sensors 2 mounted on one or more railway vehicles 1, wayside sensors 4 located on trackside infrastructure 5 (which can include any one or more of track, overhead wiring, third rail for power supply, and signalling equipment), and weather station sensors 6. Although not shown in Figure 1, the various sensors 2, 4, 6 can also have associated communications systems 7 to transmit their measurements. A sensor database 8 records the measurements made by the sensors, including the time and location of the measurements. An infrastructure diagnosis unit 10 infers the state of the trackside infrastructure from the measurements and optionally also from human inspection data. An external condition database 12 records the output from the diagnosis unit as well as recording measurements (e.g. amount of snow and amount of air-born dust and sand) which can directly affect vehicle operation. A railway vehicle maintenance planning and instruction unit 14 estimates possible damage to the vehicles from this output and from information from: (i) a failure knowledge database 16 which relates state of trackside infrastructure and other external conditions to vehicle damage (e.g. via vehicle FMECA - failure mode, effect and casualty analysis - data), and (ii) an operation database 18 which stores data such as a log of the lines over which the vehicles have travelled and the times at which the lines are travelled. The unit 14 also generates a maintenance schedule 20 (e.g. containing inspection tasks and time schedule for a given vehicle) based on the estimated possible damage. The schedule is then delivered to maintenance operatives 22, who perform the maintenance. Finally, the failure knowledge database 16 can be updated based on the operatives' assessment of the actual damage to the vehicle.

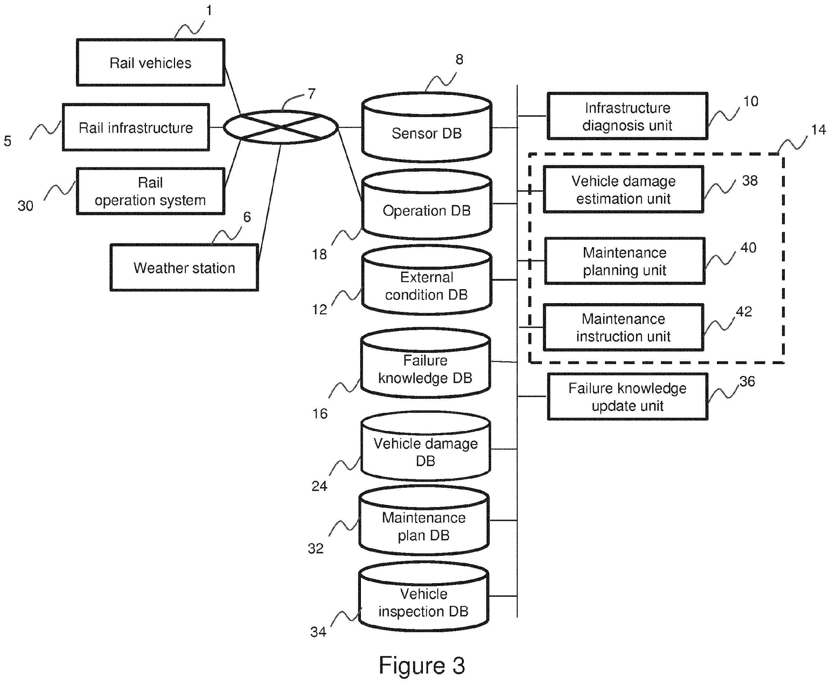

Figure 3 shows an alternative diagrammatic view of the system of Figure 1, including elements of a wider system architecture. Features of the system of Figure 1 shown in Figure 3 have the same reference numbers in both Figures. However, included in the view of Figure 3 is a rail operation system 30 which operates the railway vehicles and which records to the operation database 18 the information concerning which lines the vehicles have travelled over and the times at which they were travelled. Also included are: a maintenance plan database 32 which stores the maintenance schedules 20; a vehicle inspection database 34 which stores data relating to inspection results, such as inspection times and inspected vehicle failure modes; a vehicle damage database 24 which stores data relating to estimated vehicle damage; and a failure knowledge update unit 36 which updates the failure knowledge database 16 according to the relation between the estimated damage to a vehicle and the maintenance operatives' assessment of the actual damage to the vehicle.

Sub-elements of the railway vehicle maintenance planning and instruction unit 14 are shown in the view of Figure 3 as: vehicle damage estimation unit 38 which estimates the possible damage to the vehicle 1 (and preferably estimates the severity of damage); maintenance planning unit 40 which generates the maintenance schedules 20 according to the estimated damage by the vehicle damage estimation unit; and maintenance instruction unit 42 which can be in the form of graphics unit providing a graphical user interface (GUI) informing the maintenance operatives 22 of the maintenance tasks.

Next, the functioning of the system is explained in more detail. Rail roughness and icy formation on overhead wiring are taken as examples. In the case of rail roughness, wheel surfaces can be damaged, and/or wheel shapes can be deformed. In the case of iced overhead wiring, pantograph shoes can be badly worn. Other possible examples, however, are: wheel shape distortion caused by rail distortion; under-frame damage caused by ballast hit in snowy conditions; body damage caused by plants around the track; and air conditioner damage caused by air-born dust and sand.

To measure rail roughness, one or more vibration sensors can be mounted on an inspection railway vehicle which travels over the track. To measure the ice condition of overhead wiring, video data can be collected by static track-side cameras or by camera mounted on an inspection railway vehicle. Another option is to detect pantograph movement by measurement equipment on an inspection railway vehicle. Yet another option is to collect measurement information from weather stations, such as temperature, humidity, precipitation amount and infer the amount of ice from these measurements. In the case of measurement collected by an inspection vehicle, the measurements are used to estimate possible damage to other railway vehicles which travel along the same route. That is, the measurements pertain to the route and not just to the particular inspection vehicle. The collected measurement data are sent by associated communications system 7 and saved in the sensor database 8.

The infrastructure diagnosis unit 10 diagnoses the condition of the static railway infrastructure by using the measurement data in the sensor database 8. For example, the degree of rail roughness can be inferred from the strength of vibrations measured by the inspection railway vehicle. The ice condition of overhead wiring can be determined by video recognition of camera images of ice attached to the wires. Another option is to estimate the ice condition by pantograph movement data (from an inspection railway vehicle), the attached ice increasing high frequency components of the movement data. Yet another option is to estimate the ice condition by indirect measurements, such as weather data. In particular, when the temperature is close to or below freezing point and there is snow, rain, or conditions of high humidity ice formation on the wiring can be inferred. It is also possible to combine different measurements, e.g. direct and indirect, to determine the amount of ice.

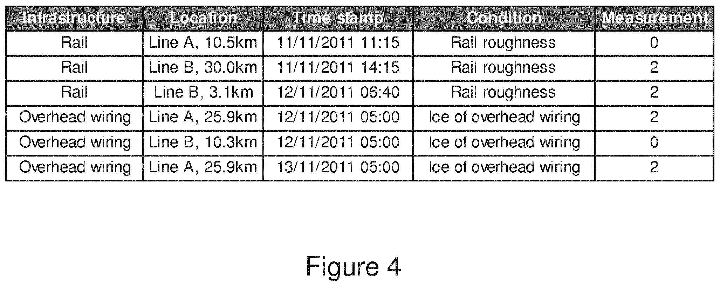

The measured condition of the infrastructure (or any other external condition) can be parameterised as a quantitative value for later use. For example, rail roughness can be parameterised as 0: Normal, 1: Minor roughness, 2: Severe roughness. The ice condition of overhead wiring can be parameterised as 0: No ice, 1: Slight ice, 2: Severe ice. Thresholds for these parameterisations can be decided by separate experiments or from maintenance histories which can provide relations between external condition and vehicle damage level. The parameterised data are saved to the external condition database 12 with a timestamp. Figure 4 shows examples of external condition data, which include: identification of infrastructure, location of the condition, time stamp of the measurement, type of condition, and the quantitative value. Although the above examples of quantitative values are integers, it is possible for non-integer (i.e. fractional) values to be used as well.

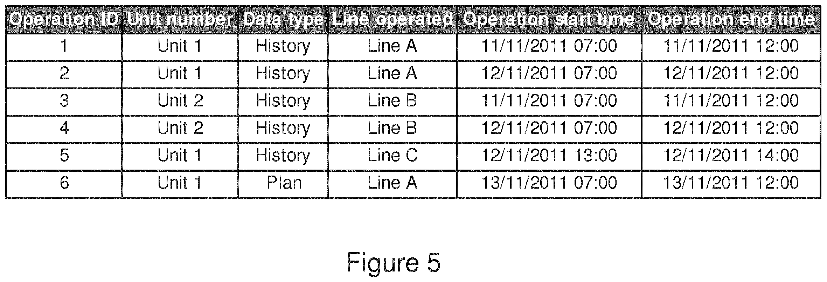

The rail operation system 30 logs the railway vehicle operations and updates these data in the operation database 18. Figure 5 show examples of operation data, which include: an operation ID, a unit number identifying the railway vehicle, a "History" or "Plan" data type, an identifier for the railway line over which the vehicle has operated, and start and end times of operation. The "History"/"Plan" data type distinguishes between operations which have occurred ("History") and operations planned for the future ("Plan"). When a planned operation is performed, the data type is changed from "Plan" to "History", along with any adjustments of the associated operational data. It is possible to record operational frequency instead of the start and end times of operation.

The failure knowledge database 18 store failure knowledge data in the form of: FMECA data; correlation of failure mode to type of external condition; and required maintenance work for a given failure mode, including a trigger damage value for that work. The correlation data provides respective correlation coefficients for each failure mode/condition combination. Thus a correlation coefficient of 2 indicates a strong correlation between failure mode and condition, a correlation coefficient of 1 indicates a slight correlation, and a correlation coefficient of 0 indicates no correlation. Again, non-integer coefficients can be used as well.

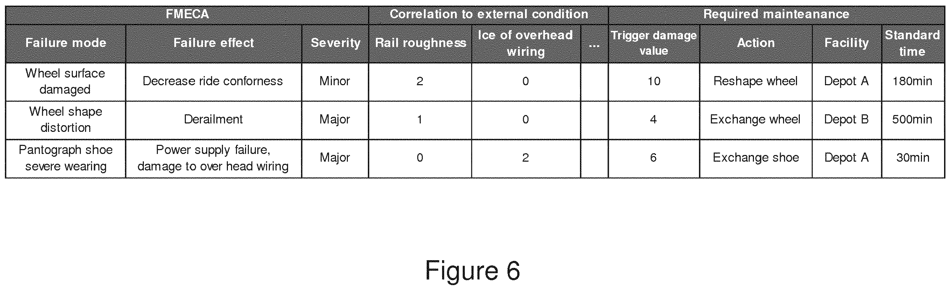

Figure 6 shows examples of failure knowledge data, which include: "Wheel surface damaged", "Wheel shape distortion" and "Pantograph shoe severe wearing" as FMECA failure modes, "Decrease ride comfort", "Derailment" and "Power supply failure or damage to overhead wiring" as corresponding failure effects, and "Minor" or "Major" as corresponding Severity assessments. The data further includes: "Rail roughness" and "Ice of overhead wiring" correlation coefficients to correlate these external conditions to the failure modes. As shown in Figure 6, "Wheel surface damaged" and "Wheel shape distortion" correlate to "Rail roughness" but not to "Ice of overhead wiring", "Wheel surface damaged" in particular having a strong correlation. As also shown in Figure 6, "Pantograph shoe severe wearing" strongly correlates to "Ice of overhead wiring" but not to "Rail roughness". Furthermore, if planning maintenance is necessary information of required maintenance is can be included. The corresponding data on required maintenance includes: "Trigger damage value", "Action", "Facility" and "Standard time". In particular, the "Trigger damage value" is defined for each failure mode, and is a predetermined threshold value which is compared (as explained below) with a damage estimate. If the trigger damage value is exceeded, the system outputs an alarm requesting inspection and/or generates a maintenance schedule to inspect the corresponding failure mode. The "Action", "Facility" and "Standard time" data entries specify the maintenance task, recommended depot and task duration to be used in the generated schedule.

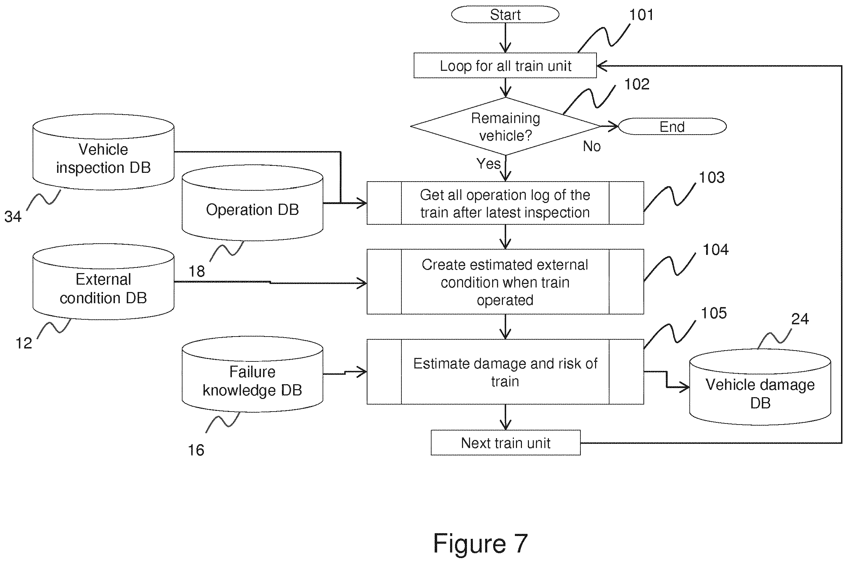

The vehicle damage estimation unit 38 estimates the possibility and severity of damage to a vehicle. The vehicle damage estimation unit combines the external condition data, the operation data, the failure knowledge data and optionally the vehicle inspection data. Figure 7 shows a flowchart of the vehicle damage estimation process performed by the unit.

In step 103, the latest operation data for a particular railway vehicle is extracted from the operation database 18, and optionally also any vehicle inspection data for the vehicle is extracted from the vehicle inspection database 34. After that, in step 104, cumulative exposure values ID(c, o) are calculated from the operation data (o) and from the external condition data (c) in the external condition database 12. In particular, by relating the time and location data when the train operated (or interpolations or extrapolations from such data) to the time and location data of each quantitative external condition value, the cumulative exposure can be calculated. For example, if a train runs for 200 km along line A when line A has an overhead ice value of 2, then runs for 50 km along line B when line B has an overhead ice value of 1, and finally runs for 100 km along line again A when line A has an overhead ice value of 0, the cumulative exposure value ID for overhead ice can be calculated as (2*200/100 + 1*50/100 + 0*200/100) = 4.5, with the overhead ice values being normalised to each 100 km of travel.

Next, by drawing on the data in the failure knowledge database 16, in step 105 the system estimates possible vehicle damage values VD(u, f) where u identifies the particular vehicle unit, and f stand for a given failure mode in the failure knowledge data. For example, VD can be calculated as:

$$\mathrm{VD(u,f)} = \sum_{c} \sum_{o} ID(c,o) * F(f,c)$$

where F(f, c) is a correlation coefficient relating failure mode f to external condition value c. For example, from Figure 6, F = 2 correlates pantograph shoe wear to overhead ice. Applying this correlation coefficient to the cumulative exposure value ID = 4.5 of the previous example, results in a corresponding VD = 9.0. The estimated vehicle damage VD(u, f) is then stored in the vehicle damage database 24.

After this, the system moves on to the next railway vehicle in step 101, checking in 102 whether there are any more vehicles on which to perform damage estimation. When damage estimations have been performed for all vehicles, the estimation loop is ended.

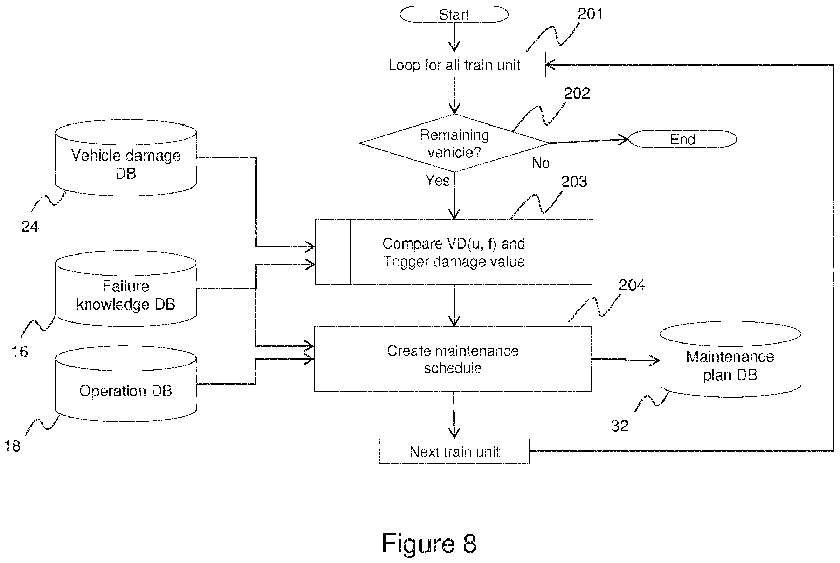

Subsequently, the maintenance planning unit 40 generates a maintenance schedule based on the damage estimates. Figure 8 shows a flowchart of the maintenance schedule generation procedure. In step 203, the VD(u, f) values from the vehicle damage database 24 and the trigger damage values from the failure knowledge database 16 are compared for a given vehicle. If VD is equal or larger than the respective trigger value, maintenance is required. Thus, in the above overhead ice example, VD is estimated as 9.0. The corresponding trigger value from Figure 6 for pantograph shoe wear is 6. In this case, therefore, a maintenance schedule is generated.

In step 204, the maintenance planning unit 40 creates a maintenance schedule for the required maintenance, the schedule using the corresponding required maintenance data (see Figure 6). If maintenance resources are inadequate, e.g. due to maintenance demands for many vehicles, or overrunning of maintenance schedules, it is possible to set maintenance priorities according to the Severity ("Major" in the case of pantograph shoe wear) of each failure mode. The created maintenance schedule is saved in maintenance plan database 32.

The system then moves on to the next railway vehicle in step 201, checking in step 202, whether there are any more vehicles on which to generate schedules. When maintenance plans for all vehicles are completed, the planning loop is ended.

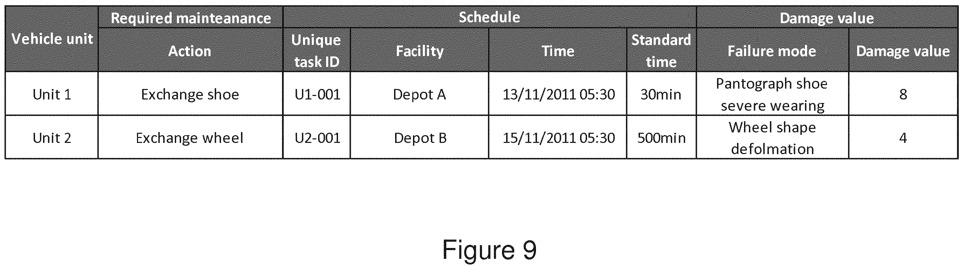

Figure 9 is an example of the data in a generated maintenance schedule. For each vehicle identified by a unit identifier, the schedule can include: a "Required maintenance" specifying a particular task such as "Exchange shoe" of "Exchange wheel"; and a "Schedule" which specifies a unique task ID, a maintenance facility such as Depot A or B, a time for start time of the maintenance task, and a standard time completing the task. Optionally, the schedule can also specify the "Damage value" (i.e. VD) and corresponding failure mode for each vehicle. This can help an operative to recognize the failure mode and damage more easily, and can assist in the creation of vehicle inspection data for updating the failure knowledge database 16, as explained below.

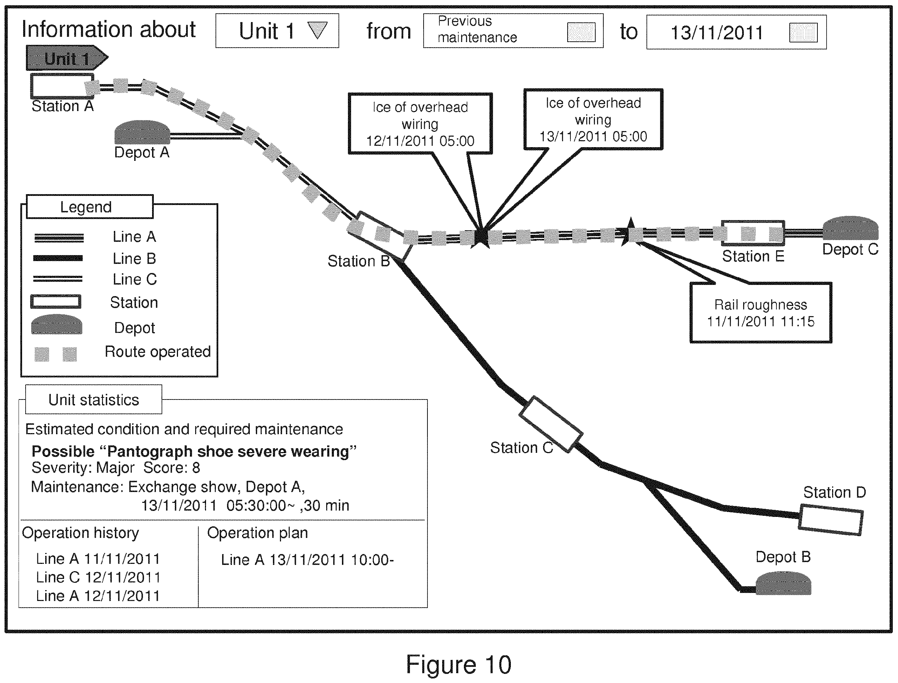

The generated maintenance plan of each vehicle can be displayed to a user as a GUI by the maintenance instruction unit 42. Figure 10, shows an example of such a GUI, which can display information such as: a vehicle unit identifier (e.g. Unit 1); possible vehicle damage (e.g. "Pantograph shoe severe wearing"), required action (e.g. "Exchange show"), a Facility (e.g. "Deport A"), a Start time (e.g. "13/11/2011 05:30:00~"), and an expected duration (e.g. "30 min"). This information can help the user to inspect the vehicle correctly. Other information can also be displayed, such as: Severity (e.g. "Major"), and a damage value score (e.g. 8). These can help the user recognize the damage and decide on maintenance priorities. The location of stations, lines and depots can also be shown, along with external conditions on the lines based on the external condition data, and the vehicle operation history. These can also help the user to recognize the cause of vehicle damage and facilitate effective vehicle inspection. Also, it is possible to show future operation plans, which allows the user to determine when the maintenance must be finished to avoid operational delays.

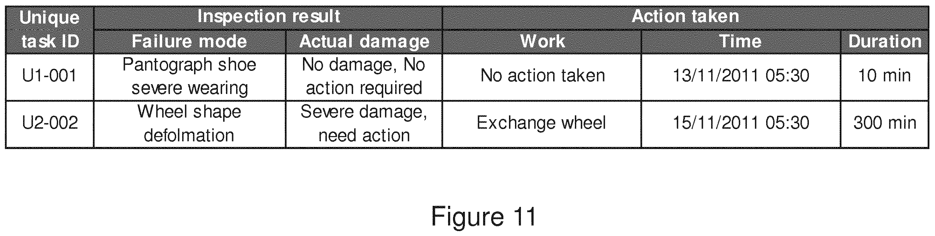

The user can also inspect the vehicle to determine its actual condition. The actual condition results can be entered into the system via the GUI, and recorded as vehicle inspection data in the vehicle inspection database 34. Figure 11 shows examples of vehicle inspection data in the form of a unique task ID, the expected failure mode, the actual damage, the work actually undertaken, and the time and duration of that work.

The failure knowledge update unit 36 can then update the failure knowledge database 16 on the basis of the actual condition results. In particular, by using the vehicle inspection data, it is possible to update the correlation coefficients F(f, c). Thus when the actual damage is bigger than the estimated damage, the respective F(f, c) can be increased, and when the actual damage is smaller, the respective F(f, c) can be decreased. This updating improves the future damage estimates. For example, in Figure 9 the Damage value for pantograph show wear was estimated as 8, but in Figure 11 the result of actual inspection was no shoe damage. This suggests that the correlation coefficient F(f, c) value of 2 in Figure 6 for pantograph shoe wear under overhead ice conditions may be too high.

Another option for updating the failure knowledge data is to adjust the trigger damage value. Thus rather than reducing the correlation coefficient in Figure 6 for pantograph shoe wear under overhead ice conditions, an alternative is to increase the corresponding trigger damage value. Optionally, the "Standard time" in the failure knowledge data can also be updated based on the actual duration of the maintenance work.

As well as using the comparisons of the possible vehicle damage values VD(u, f) and the trigger damage values to create maintenance schedules, the comparisons can also be used to schedule the operation of railway vehicles in a fleet of vehicles in order to avoid that any vehicle has a possible vehicle damage value which exceed the corresponding trigger damage value. In this way, by appropriate timing of regular (rather than contingent) vehicle maintenance, it is possible to reduce the frequency of vehicle failures, increasing overall fleet reliability.

Advantageously, the system allows railway vehicle damage estimates to be made and maintenance scheduled by measuring external conditions along the routes travelled by the vehicles. Thus it is not necessary to install and maintain on-board sensors in every vehicle.

**Claims**

1. A method for estimating damage to a railway vehicle, the method including steps of:

recording route data on the routes over which the railway vehicle travels;

measuring the operational condition external to the vehicle along the routes at the time of travel by the railway vehicle, the external condition being measured as one or more quantitative values; and

estimating, for the or each quantitative value, a respective possible damage value using a cumulative exposure value which quantifies the cumulative exposure of the vehicle to the quantitative value over the recorded routes;

wherein:

in the measuring step, the amount of ice on overhead wires is measured as a quantitative value, and in the estimating step, a respective possible damage value quantifies possible pantograph shoe wear; and/or

in the measuring step, the degree of rail roughness is measured as a quantitative value, and in the estimating step, respective possible damage values quantify possible wheel surface wear and/or possible distortion of wheel shape; and/or

in the measuring step, the degree of rail distortion is measured as a quantitative value, and in the estimating step, a respective possible damage value quantifies possible distortion of wheel shape; and/or

in the measuring step, the amount of snow on track is measured as a quantitative value, and in the estimating step, a respective possible damage value quantifies possible under-frame damage caused by ballast hit; and/or

in the measuring step, the amount of air-born dust and sand is measured as a quantitative value, and in the estimating step, a respective possible damage value quantifies possible air conditioner damage.

2. A method for estimating damage of claim 1, wherein:

in the recording step, the route data identifies the lines over which the vehicle travels and the times at which the lines are travelled.

3. A method for estimating damage of claim 1 or 2, wherein:

in the measuring step, the time and the location of the external condition are measured.

4. A method for estimating damage of any one of the previous claims, wherein:

in the estimating step, the respective possible damage value is estimated by multiplying the cumulative exposure value with a corresponding correlation coefficient for the respective possible damage value.

5. A method for estimating damage of claim 4, further including updating the correlation coefficient based on an assessment of actual damage to the vehicle.

6. A method for planning maintenance of a railway vehicle including:

performing the method for estimating damage of any one of the previous claims; and generating a vehicle maintenance schedule based on the estimated possible damage.

7. A method for planning maintenance of claim 6, wherein:

in the generating step, maintenance is scheduled when the or each possible damage value exceeds a corresponding trigger damage value

8. A method for planning maintenance of claim 7, further including updating the trigger damage value based on an assessment of actual damage to the vehicle.

9. A method for planning maintenance of any one of claims 6 to 8, further including:

displaying the generated maintenance schedule.

10. A method for planning maintenance of any one of claims 6 to 9, further including a step of:

displaying the recorded route data and the measured external condition.

11. A procedure for operating a fleet of railway vehicles including:

performing the method of any one of claims 1 to 5 for each vehicle of the fleet; and scheduling operation of the vehicles so that, for each vehicle, the or each possible damage value stays below a corresponding trigger damage value.

12. A procedure for repairing a railway vehicle including:

performing the method of any one of claims 6 to 10; and performing maintenance on the railway vehicle according to the generated maintenance schedule.

**13.** A system for (A) estimating damage to a railway vehicle, the system being configured to perform the method of any one of claims 1 to 5, (B) planning maintenance of a railway vehicle, the system being configured to perform the method of any one of claims 6 to 10, or (C) operating a fleet of railway vehicles, the system being configured to perform the method of claim 11.

**14.** A computer program comprising code which, when run on a computer, causes the computer to perform the method of any one of claims 1 to 11.

**15.** A computer readable medium storing the computer program of claim 14.

**Patentansprüche**

**1.** Verfahren zur Schadenseinschätzung an einem Schienenfahrzeug, wobei in dem Verfahren Schritte ausgeführt werden, gemäß denen Streckendaten auf den Strecken aufgezeichnet werden, über die das Schienenfahrzeug fährt, der bezüglich des Fahrzeugs externe Betriebszustand längs der Strecken zu der Fahrtzeit durch das Schienenfahrzeug gemessen wird, wobei der externe Zustand in Form eines oder mehrerer quantitativer Werte gemessen wird, und für den oder die quantitativen Werte ein zugehöriger möglicher Schadenswert unter Verwendung eines kumulativen Aussetzungswerts geschätzt wird, der die kumulative Aussetzung des Fahrzeugs gegenüber dem quantitativen Wert über die aufgezeichneten Strecken quantifiziert, wobei in dem Messschritt die Menge an Eis an Oberleitungen als ein quantitativer Wert gemessen wird und in dem Schätzschritt ein zugehöriger möglicher Schadenswert eine mögliche Pantographschleifschuhabnutzung quantifiziert, und/oder in dem Messschritt der Grad der Schienenrauigkeit als ein quantitativer Wert gemessen wird und in dem Schätzschritt zugehörige mögliche Schadenswerte eine mögliche Radflächenabnutzung und/oder eine mögliche Verformung der Radform quantifizieren, und/oder in dem Messschritt der Grad der Schienenverformung als ein quantitativer Wert gemessen wird und in dem Schätzschritt ein zugehöriger möglicher Schadenswert die mögliche Verformung der Radform quantifiziert, und/oder in dem Messschritt die Schneemenge auf dem Gleis als ein quantitativer Wert gemessen wird und in dem Schätzschritt ein zugehöriger möglicher Schadenswert einen durch Ballastkontakt verursachten Unterbodenschaden quantifiziert, und/oder in dem Messschritt die Menge von luftgetragenem Staub und Sand als ein quantitativer Wert gemessen wird und in dem Schätzschritt ein zugehöriger möglicher Schadenswert einen möglichen Klimaanlagenschaden quantifiziert.

**2.** Verfahren zur Schadenseinschätzung nach Anspruch 1, wobei in dem Aufzeichnungsschritt die Streckendaten die Linien identifizieren, über die das Fahrzeug fährt, und die Zeiten, zu denen die Linien befahren werden.

**3.** Verfahren zur Schadenseinschätzung nach Anspruch 1 oder 2, wobei in dem Messschritt die Zeit und der Ort des externen Zustands gemessen werden.

**4.** Verfahren zur Schadenseinschätzung nach einem der vorstehenden Ansprüche, wobei in dem Schätzschritt der zugehörige mögliche Schadenswert eingeschätzt wird, indem der kumulative Aussetzungswert mit einem entsprechenden Korrelationskoeffizienten für den zugehörigen möglichen Schadenswert multipliziert wird.

**5.** Verfahren zur Schadenseinschätzung nach Anspruch 4, in dem ferner der Korrelationskoeffizient basierend auf einer Beurteilung eines tatsächlichen Schadens an dem Fahrzeug aktualisiert wird.

**6.** Verfahren zur Wartungsplanung eines Schienenfahrzeugs, in dem das Verfahren zur Schadenseinschätzung nach einem der vorstehenden Ansprüche durchgeführt wird, und ein Fahrzeugwartungsplan basierend auf dem geschätzten möglichen Schaden erstellt wird.

**7.** Verfahren zur Wartungsplanung nach Anspruch 6, wobei in dem Erstellschritt die Wartung geplant wird, wenn der oder jeder mögliche Schadenswert einen zugehörigen Auslöseschadenswert übersteigt.

**8.** Verfahren zur Wartungsplanung nach Anspruch 7, in dem ferner der Auslöseschadenswert basierend auf einer Beurteilung des tatsächlichen Schadens an dem Fahrzeug aktualisiert wird.

**9.** Verfahren zur Wartungsplanung nach einem der Ansprüche 6 bis 8, in dem ferner der erstellte Wartungsplan angezeigt wird.

**10.** Verfahren zur Wartungsplanung nach einem der Ansprüche 6 bis 9, in dem ferner die aufgezeichneten Streckendaten und der gemessene externe Zustand angezeigt werden.

**11.** Prozedur zum Betreiben einer Flotte von Schienenfahrzeugen, in der
das Verfahren nach einem der Ansprüche 1 bis 5 für jedes Fahrzeug der Flotte durchgeführt wird, und der Betrieb der Fahrzeuge so geplant wird, dass für jedes Fahrzeug der oder jeder mögliche Schadenswert unterhalb eines entsprechenden Auslöseschadenswerts bleibt.

**12.** Prozedur zum Reparieren eines Schienenfahrzeugs, in der
das Verfahren nach einem der Ansprüche 6 bis 10 durchgeführt wird, und
eine Wartung des Schienenfahrzeugs gemäß dem erstellten Wartungsplan durchgeführt wird.

**13.** System zur (A) Schadenseinschätzung eines Schienenfahrzeugs, wobei das System dazu konfiguriert ist, das Verfahren nach einem der Ansprüche 1 bis 5 durchzuführen, zur (B) Wartungsplanung eines Schienenfahrzeugs, wobei das System dazu konfiguriert ist, das Verfahren nach einem der Ansprüche 6 bis 10 durchzuführen, oder zum (C) Betreiben einer Flotte von Schienenfahrzeugen, wobei das System dazu konfiguriert ist, das Verfahren nach Anspruch 11 durchzuführen.

**14.** Computerprogramm mit Programmcode, der bei Ausführung auf einem Computer den Computer dazu veranlasst, das Verfahren nach einem der Ansprüche 1 bis 11 durchzuführen.

**15.** Computerlesbares Medium, auf dem das Computerprogramm nach Anspruch 14 gespeichert ist.

**Revendications**

**1.** Procédé pour estimer des dommages causés à un véhicule ferroviaire, le procédé incluant les étapes consistant à :

enregistrer des données d'itinéraires sur les itinéraires que le véhicule ferroviaire emprunte, mesurer l'état opérationnel externe au véhicule le long des itinéraires au moment où le véhicule ferroviaire les emprunte, l'état externe étant mesuré sous la forme d'une ou plusieurs valeurs quantitatives, et
estimer, pour la ou chaque valeur quantitative, une valeur respective de dommages possibles en utilisant une valeur d'exposition cumulée qui quantifie l'exposition cumulée du véhicule à la valeur quantitative sur les itinéraires enregistrés,

dans lequel :

à l'étape de mesure, la quantité de glace sur les fils aériens est mesurée en tant que valeur quantitative, et à l'étape d'estimation, une valeur respective de dommages possibles quantifie une usure possible de sabot de pantographe, et/ou
à l'étape de mesure, le degré de rugosité du rail est mesuré en tant que valeur quantitative, et à l'étape d'estimation, des valeurs respectives de dommages possibles quantifient une usure de surface de roue possible et/ou une déformation possible de la forme de roue, et/ou
à l'étape de mesure, le degré de déformation du rail est mesuré en tant que valeur quantitative, et à l'étape d'estimation, une valeur respective de dommages possibles quantifie une déformation possible de la forme de roue, et/ou
à l'étape de mesure, la quantité de neige sur la voie est mesurée en tant que valeur quantitative, et à l'étape d'estimation, une valeur respective de dommages possibles quantifie des dommages causés au châssis par l'impact du ballast, et/ou
à l'étape de mesure, la quantité de poussière et de sable en suspension dans l'air est mesurée en tant que valeur quantitative, et à l'étape d'estimation, une valeur respective de dommages possibles quantifie des dommages possibles causés au système de climatisation.

**2.** Procédé d'estimation de dommages selon la revendication 1, dans lequel :

à l'étape d'enregistrement, les données d'itinéraires identifient les lignes que le véhicule emprunte et les heures auxquelles les lignes sont empruntées.

**3.** Procédé d'estimation de dommages selon la revendication 1 ou 2, dans lequel :

à l'étape de mesure, l'heure et l'emplacement de l'état externe sont mesurés.

**4.** Procédé d'estimation de dommages selon l'une quelconque des revendications précédentes, dans lequel :

à l'étape d'estimation, la valeur respective de dommages possibles est estimée en multipliant la valeur d'exposition cumulée par un coefficient de corrélation correspondant pour la valeur respective de dommages possibles.

**5.** Procédé d'estimation de dommages selon la revendication 4, incluant en outre la mise à jour du coefficient de corrélation sur la base d'une évaluation des dommages réels causés au véhicule.

**6.** Procédé de planification de la maintenance d'un véhicule ferroviaire incluant les étapes consistant à :

mettre en oeuvre le procédé d'estimation de dommages de l'une quelconque des revendications précédentes, et
générer un calendrier de maintenance de véhicule sur la base des dommages possibles estimés.

7. Procédé de planification de la maintenance selon la revendication 6, dans lequel :

à l'étape de génération, une maintenance est planifiée lorsque la ou chaque valeur de dommages possibles dépasse une valeur correspondante de déclenchement dû à des dommages.

8. Procédé de planification de la maintenance selon la revendication 7, incluant en outre la mise à jour de la valeur de déclenchement dû à des dommages sur la base d'une évaluation des dommages réels causés au véhicule.

9. Procédé de planification de la maintenance selon l'une quelconque des revendications 6 à 8, incluant en outre l'étape consistant à :

afficher le calendrier de maintenance généré.

10. Procédé de planification de la maintenance selon l'une quelconque des revendications 6 à 9, incluant en outre une étape consistant à :

afficher les données d'itinéraires enregistrées et l'état externe mesuré.

11. Processus d'exploitation d'une flotte de véhicules ferroviaires incluant les étapes consistant à :

mettre en oeuvre le procédé de l'une quelconque des revendications 1 à 5 pour chaque véhicule du parc, et
planifier l'exploitation des véhicules de sorte que, pour chaque véhicule, la ou chaque valeur de dommages possibles reste inférieure à une valeur correspondante de déclenchement dû à des dommages.

12. Processus de réparation d'un véhicule ferroviaire incluant les étapes consistant à :

mettre en oeuvre le procédé de l'une quelconque des revendications 6 à 10, et
réaliser la maintenance sur le véhicule ferroviaire conformément au calendrier de maintenance généré.

13. Système destiné à (A) estimer des dommages causés à un véhicule ferroviaire, le système étant configuré pour mettre en oeuvre le procédé de l'une quelconque des revendications 1 à 5, (B) planifier la maintenance d'un véhicule ferroviaire, le système étant configuré pour mettre en oeuvre le procédé de l'une quelconque des revendications 6 à 10, ou (C) exploiter un parc de véhicules ferroviaires, le système étant configuré pour mettre en oeuvre le procédé de la revendication 11.

14. Programme informatique comportant du code qui, lorsqu'il s'exécute sur un ordinateur, amène l'ordinateur à mettre en oeuvre le procédé de l'une quelconque des revendications 1 à 11.

15. Support lisible par ordinateur mémorisant le programme informatique de la revendication 14.

Figure 1

Figure 2

Figure 3

| Infrastructure | Location | Time stamp | Condition | Measurement |
| --- | --- | --- | --- | --- |
| Rail | Line A, 10.5km | 11/11/2011 11:15 | Rail roughness | 0 |
| Rail | Line B, 30.0km | 11/11/2011 14:15 | Rail roughness | 2 |
| Rail | Line B, 3.1km | 12/11/2011 06:40 | Rail roughness | 2 |
| Overhead wiring | Line A, 25.9km | 12/11/2011 05:00 | Ice of overhead wiring | 2 |
| Overhead wiring | Line B, 10.3km | 12/11/2011 05:00 | Ice of overhead wiring | 0 |
| Overhead wiring | Line A, 25.9km | 13/11/2011 05:00 | Ice of overhead wiring | 2 |

Figure 4

| Operation ID | Unit number | Data type | Line operated | Operation start time | Operation end time |
|---|---|---|---|---|---|
| 1 | Unit 1 | History | Line A | 11/11/2011 07:00 | 11/11/2011 12:00 |
| 2 | Unit 1 | History | Line A | 12/11/2011 07:00 | 12/11/2011 12:00 |
| 3 | Unit 2 | History | Line B | 11/11/2011 07:00 | 11/11/2011 12:00 |
| 4 | Unit 2 | History | Line B | 12/11/2011 07:00 | 12/11/2011 12:00 |
| 5 | Unit 1 | History | Line C | 12/11/2011 13:00 | 12/11/2011 14:00 |
| 6 | Unit 1 | Plan | Line A | 13/11/2011 07:00 | 13/11/2011 12:00 |

Figure 5

EP 2 937 241 B1

| FMECA | | | Correlation to external condition | | | Required mainteanance | | | |
|---|---|---|---|---|---|---|---|---|---|
| Failure mode | Failure effect | Severity | Rail roughness | Ice of overhead wiring | ... | Trigger damage value | Action | Facility | Standard time |
| Wheel surface damaged | Decrease ride conforness | Minor | 2 | 0 | | 10 | Reshape wheel | Depot A | 180min |
| Wheel shape distortion | Derailment | Major | 1 | 0 | | 4 | Exchange wheel | Depot B | 500min |
| Pantograph shoe severe wearing | Power supply failure, damage to over head wiring | Major | 0 | 2 | | 6 | Exchange shoe | Depot A | 30min |

Figure 6

Figure 7

Figure 8

Start

Loop for all train unit — 201

Remaining vehicle? — 202

No → End

Yes

Compare VD(u, f) and Trigger damage value — 203

Create maintenance schedule — 204

Next train unit

Maintenance plan DB — 32

Vehicle damage DB — 24

Failure knowledge DB — 16

Operation DB — 18

| Vehicle unit | Required mainteanance | | Schedule | | | | Damage value | |
|---|---|---|---|---|---|---|---|---|
| | Action | Unique task ID | Facility | Time | Standard time | Failure mode | Damage value | |
| Unit 1 | Exchange shoe | U1-001 | Depot A | 13/11/2011 05:30 | 30min | Pantograph shoe severe wearing | 8 |
| Unit 2 | Exchange wheel | U2-001 | Depot B | 15/11/2011 05:30 | 500min | Wheel shape defolmation | 4 |

Figure 9

EP 2 937 241 B1

Figure 10

| Unique task ID | Inspection result | | Action taken | | |
|---|---|---|---|---|---|
| | Failure mode | Actual damage | Work | Time | Duration |
| U1-001 | Pantograph shoe severe wearing | No damage, No action required | No action taken | 13/11/2011 05:30 | 10 min |
| U2-002 | Wheel shape defolmation | Severe damage, need action | Exchange wheel | 15/11/2011 05:30 | 300 min |

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 01015001 A2
- US 5956664 A